# EUROPEAN PATENT APPLICATION

(11) **EP 2 829 946 A1**
(43) Date of publication of application: **28.01.2015**
(21) Application number: 12876793.6
(22) Date of filing: 14.05.2012
(51) Int. Cl.: G06F 1/32

(54) **DEVICE AND METHOD FOR SYSTEM POWER SUPPLY MANAGEMENT AND SYSTEM HAVING POWER SUPPLY ENERGY-SAVING MANAGEMENT FUNCTION**

(71) Applicant: Huawei Technologies Co., Ltd, Shenzhen, Guangdong 518129 (CN)
(72) Inventor: FANG, Qingyin, Shenzhen Guangdong 518129 (CN); XIA, Qiangzhi, Shenzhen Guangdong 518129 (CN); QIU, Chaoping, Shenzhen Guangdong 518129 (CN)
(74) Representative: Thun, Clemens
(86) International application number: PCT/CN2012/075448
(87) International publication number: WO 2013/170417

(57) **Abstract**

The present invention discloses a system power supply management apparatus and method, and a system with a power supply energy saving management function, where the apparatus includes: a board energy saving management module, a system energy saving management module, and a power supply energy saving management module, where, the board energy saving management module is configured to perform a board energy saving action, generate a board power variation corresponding to the board energy saving action, and send, before performing the board energy saving action, the board power variation to the system energy saving management module; and the system energy saving management module is configured to: after receiving the board power variation, calculate, according to the board power variation, an expected power variation of the system, and control, according to the expected power variation of the system, the power supply energy saving management module to adjust an output power of a power module in the system. The present invention overcomes a technical problem of poor power supply energy saving control efficiency of a system in the prior art, and achieves a technical effect of making power supply energy saving control more accurate and maximizing a power supply energy saving effect.

## Description

### TECHNICAL FIELD

The present invention relates to the field of power supplies, and in particular, to a system power supply management apparatus and method, and a system with a power supply energy saving management function.

### BACKGROUND

In a common system, to ensure that the system can work normally when a power module becomes faulty, generally, more than one redundant power module is working. However, the power module itself needs to consume part of electric power. Therefore, electric power consumed by the system increases, and output efficiency of the power module is not high, and as a result, maximum utilization of the power module cannot be achieved.

In the prior art, to reduce system power consumption, a change in dynamic power of the system is first detected, and then related operations of shutting down relevant redundant power modules and adjusting an input bus voltage of the system are performed according to the detected power change, so as to finally achieve an objective of reducing system power consumption. This method for reducing system power consumption, in one aspect, needs to first detect a change in dynamic power of the system, and in another aspect, an energy saving operation performed for the power module builds on the detected change in dynamic power of the system. Therefore, the energy saving operation of the system depends on a detection process. Meanwhile, the detection process for the change in dynamic power of the system occurs after a change of the dynamic power of the system. Therefore, the method for reducing system power consumption is subject to certain lagging, and cannot change according to the dynamic power of the system or perform voltage regulation or shutdown control for the power module in time and accurately, and therefore, the energy saving effect is poor.

### SUMMARY

A technical problem that the present invention needs to solve is to provide a system power supply management apparatus and method, and a system with a power supply energy saving management function, so that power supply energy saving control of the system can be timelier and more accurate, thereby achieving an objective of maximizing an energy saving effect.

To solve the foregoing technical problem, according to one aspect, an embodiment of the present invention provides a system power supply management apparatus, which includes: at least one board energy saving management module, configured to perform a board energy saving action and store a board power variation corresponding to the board energy saving action; a power supply energy saving management module, configured to adjust an output power of a power module in a system; and a system energy saving management module, configured to: before the board energy saving management module performs the board energy saving action, calculate, according to the board power variation obtained by the board energy saving management module, an expected power variation of the system, and control, according to the expected power variation of the system, the power supply energy saving management module to work.

The system energy saving management module includes: a receiving unit, configured to obtain the board power variation before the board energy saving action is performed; a calculating unit, configured to calculate the expected power variation of the system; and an executing unit, configured to control, according to the expected power variation of the system, the power supply energy saving management module to work.

The system energy saving management module further includes: a determining unit, configured to determine, according to the board power variation obtained by the receiving unit, whether board power consumption becomes higher, and when determining that the board power consumption becomes higher, control to start the executing unit before the board energy saving management module performs the board energy saving action; and when determining that the board power consumption becomes lower, control to start the executing unit after the board energy saving management module performs the board energy saving action.

When the determining unit determines that the board power consumption becomes higher, the executing unit controls the power supply energy saving management module to increase an output power of the power module; and when the determining unit determines that the board power consumption becomes lower, the executing unit controls the power supply energy saving management module to decrease the output power of the power module.

The board energy saving management module is further configured to store a board power variation corresponding to each board energy saving action performed by the board energy saving management module.

The energy saving action performed by the power module under control of the power supply energy saving management module includes: turning on/shutting down the power module, and adjusting a bus voltage of a system power supply.

The board energy saving action performed by the board energy saving management module includes: setting a working state of a component deployed on a board, and setting an on/off state of a port on the board.

According to another aspect, an embodiment of the present invention provides a system power supply management method, which includes the following steps: obtaining, before performing a board energy saving action for a board, a board power variation corresponding to the board energy saving action; calculating, according to the board power variation, an expected power variation of the system where the board is located; and adjusting, according to the expected power variation of the system, an output power of a power module in the system.

The method for adjusting, according to the expected power variation of the system, an output power of a power module in the system specifically includes: determining, according to the obtained board power variation, whether board power consumption becomes higher, and when determining that the board power consumption becomes higher, adjusting an output power of the power module before performing the board energy saving action; and when determining that the board power consumption becomes lower, adjusting the output power of the power module after performing the board energy saving action.

The method for adjusting an output power of the power module specifically includes: when determining that the board power consumption becomes higher, increasing the output power of the power module; and when determining that the board power consumption becomes lower, decreasing the output power of the power module.

Before the step of obtaining, before performing a board energy saving action for a board, a board power variation corresponding to the board energy saving action, the method includes: storing a board power variation corresponding to each board energy saving action.

The method for increasing/decreasing the output power of the power module specifically includes: increasing, by turning on the power module, a bus voltage of a system power supply to increase the output power of the power module; and decreasing, by shutting down the power module, the bus voltage of the system power supply to decrease the output power of the power module.

The method for performing a board energy saving action specifically includes: setting a power supply working state of a component deployed on the board, and setting an on/off state of a port on the board.

In addition, the present invention further provides a system, which includes a system power supply management apparatus in any one of claims 1 to 6. The system includes a power module, a main control board, a secondary control board, and at least one board, where the power module is configured to supply electric power to each board, the main control board, and the secondary control board; a board energy saving management module is disposed on each board, the main control board, and the secondary control board separately; the power supply energy saving management module and the system energy saving management module are further disposed on the main control board; and the power supply energy saving management module and the system energy saving management module are further disposed on the secondary control board.

By using the technical solution of the system power supply management apparatus and method provided by the present invention, a system energy saving management module calculates, according to a board power variation sent by a board energy saving management module, an expected power variation of the system before the board energy saving management module performs a board energy saving action. In one aspect, the system can obtain, while performing power supply energy saving control, a dynamic power change that will be generated in the system before the board energy saving action is performed, so that a power supply energy saving control process of the system is timelier. In another aspect, the expected power variation of the system is calculated according to the board power variation, thereby omitting a detection process for the dynamic power change of the system. The system energy saving management module controls, according to the calculated expected power variation of the system, the power supply energy saving management module to work, so that the power supply energy saving management module performs the energy saving action by controlling a power module. Through interaction between the board energy saving management module and the system energy saving management module, a linkage is implemented between a board energy saving action and a power supply energy saving action, thereby completing adjustment of an output power of the power module in the system.

The embodiments of the present invention avoid the problem of lagging and poor power efficiency of power supply energy saving control of a system in the prior art because a change in dynamic power of the system needs to be first detected, and then an energy saving operation is performed, so that a power supply energy saving control operation can be performed in a timelier manner, thereby better implementing power supply energy saving for the system and reducing power consumption of the system.

### BRIEF DESCRIPTION OF DRAWINGS

To describe the technical solutions in the embodiments of the present invention or in the prior art more clearly, the following briefly introduces the accompanying drawings required for describing the embodiments or the prior art. Apparently, the accompanying drawings in the following description show merely some embodiments of the present invention, and a person of ordinary skill in the art may still derive other drawings from these accompanying drawings without creative efforts.
FIG. 1 is a schematic structural diagram of an embodiment of a system power supply management apparatus according to the present invention;
FIG. 2 is a schematic structural diagram of a system energy saving management module in FIG. 1;
FIG. 3 is a schematic structural diagram of an embodiment of a system with a power supply energy saving management function according to the present invention;
FIG. 4 is a flowchart of an embodiment of a system power supply management method according to the present invention; and
FIG. 5 is a flowchart of a method for adjusting, according to an expected power variation of a system, an output power of a power module in the system in a system power supply management method according to the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are merely a part rather than all of the embodiments of the present invention. All other embodiments obtained by a person of ordinary skill in the art based on the embodiments of the present invention without creative efforts shall fall within the protection scope of the present invention.

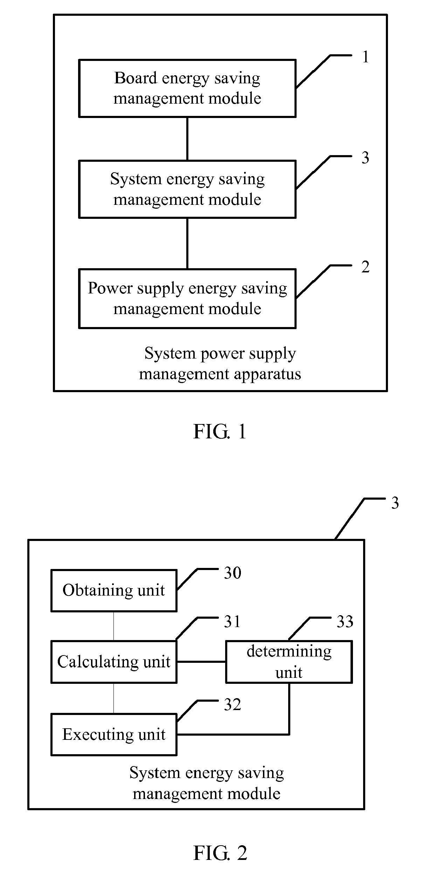

The following describes the embodiments of the present invention with reference to the accompanying drawings. Refer to FIG. 1, which is a schematic structural diagram of an embodiment of a system power supply management apparatus according to the present invention.

As shown in FIG. 1, the apparatus includes: a board energy saving management module 1, a system energy saving management module 3, and a power supply energy saving management module 2. The board energy saving management module 1 may be disposed on a board of a system. One board energy saving management module 1 may be disposed on each board. The energy saving management module on each board is connected to the system energy saving management module 3.

The board energy saving management module 1 is configured to perform a board energy saving action and generate a board power variation corresponding to the board energy saving action; and
the system energy saving management module 3 is configured to: after receiving the board power variation, calculate, according to the board power variation, an expected power variation of the system, and control, according to the expected power variation of the system, the power supply energy saving management module 2 to adjust an output power of a power module in the system.

The board energy saving action performed by the board energy saving management module 1 may specifically include: setting a power supply working state of a component deployed on a board, and setting an on/off state of a port on the board. The component on the board may be a processor, a memory, a hard disk, Ethernet, and so on. Specifically, the board energy saving management module 1 may set a working state of a device deployed on the board, such as a processor, a memory, a hard disk, or Ethernet, for example, performing frequency modulation for the device, adjusting the device to a dormant state, or shutting down the device. The board energy saving management module 1 may further perform an enabling or a disabling operation on a port on the board. In this implementation manner of the system power supply management apparatus provided by the present invention, the board energy saving management module 1 achieves an objective of board energy saving by performing the foregoing operations.

The power supply energy saving management module 2 is specifically configured to control, according to an expected power variation of the system energy saving management module 3, the output power of the power module in the system. Specifically, the power supply energy saving management module 2 may increase the output power of the power module by turning on a redundant backup power module disposed in the system and/or increasing an input bus voltage of the power module in the system. Similarly, the power supply energy saving management module 2 may also decrease the output power of the power module by shutting down the redundant backup power module disposed in the system and/or decreasing the input bus voltage of the power module in the system. Under control of the power supply energy saving management module 2, adjustment of the output power of the power module in the system can be implemented conveniently, thereby improving power supply efficiency and achieving an objective of power supply energy saving.

As shown in FIG. 2, which describes further details of the system power supply management apparatus provided by the present invention, the system energy saving management module 3 includes: a receiving unit 30, a calculating unit 31, and an executing unit 32.

The receiving unit 30 is configured to receive a board power variation sent by the board energy saving management module 1;
the calculating unit 31 is configured to calculate, according to the board power variation received by the receiving unit 30, an expected power variation of the system; and
the executing unit 32 is configured to control, according to the expected power variation of the system obtained through calculation by the calculating unit 31, the power supply energy saving management module 2 to adjust an output power of a power module in the system.

The board energy saving management module 1, before performing a board energy saving action, sends, to the system energy saving management module 3, information of a board power variation that will be triggered by the board energy saving action. The board energy saving management module 1 is further configured to store a board power variation corresponding to each board energy saving action performed by the board energy saving management module 1. The receiving unit 30 of the system energy saving management module 3, after receiving the board power variation, depends on the calculating unit 31 to calculate the expected power variation of the system. It should be noted that, the expected power variation of the system is a power change of the system caused by the board energy saving action. In this way, the executing unit 32 can control, according to the expected power variation of the system, the power supply energy saving management module 2 to work, so as to adjust the output power of the power module in the system. Through collaborative work of the board energy saving management module 1 and the system energy saving management module 2, a linkage can be implemented between a board energy saving action and a power supply energy saving action, thereby improving energy saving efficiency.

To ensure normal working of functional boards such as a board and a main control board in the system, while controlling the output power of the power module in the system, the present invention provides two working modes for adjusting the output power of the power module with respect to two cases where the board power consumption becomes lower and the board power consumption becomes higher. To implement the two working modes of the system, the system energy saving management module of the present invention further includes a determining unit 33.

The determining unit 33 is specifically configured to determine, according to the expected power variation of the system obtained through calculation by the calculating unit, a change trend of the board power consumption, and notify the executing unit 32 of the change trend.

In this implementation manner, when the determining unit 33 determines that the board power consumption becomes higher, the executing unit 32 sends a first control signal to the power supply energy saving management module, so that the power supply energy saving management module increases the output power of the power module; and when the determining unit 33 determines that the board power consumption becomes lower, the executing unit 32 sends a second control signal to the power supply energy saving management module, so that the power supply energy saving management module decreases the output power of the power module.

Specifically, that the power supply energy saving management module 2 increases the output power of the power module includes: turning on a redundant backup power module disposed in the system and/or increasing the input bus voltage of the power module in the system; and
that the power supply energy saving management module 2 decreases the output power of the power module includes: shutting down the redundant backup power module disposed in the system and/or decreasing the input bus voltage of the power module in the system.

The embodiment of the present invention avoids the problem of lagging and poor power efficiency of power supply energy saving control of a system in the prior art because a change in dynamic power of the system needs to be first detected, and then an energy saving operation is performed, so that a power supply energy saving control operation can be performed in a timelier manner, thereby better implementing power supply energy saving for the system and reducing power consumption of the system.

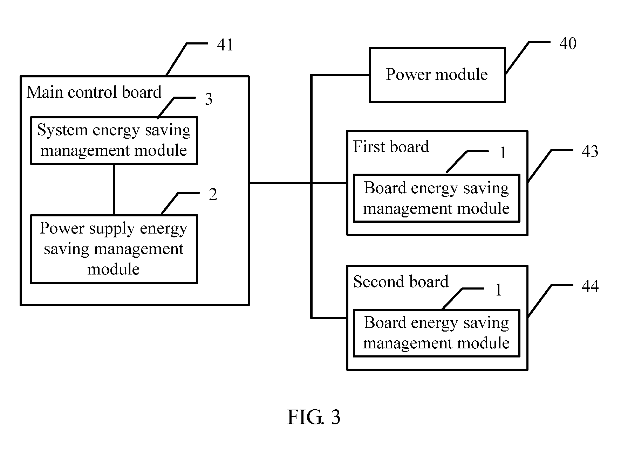

FIG. 3 is a schematic structural diagram of an embodiment of a system with a power supply energy saving management function according to the present invention. As shown in FIG. 3, the system with a power supply energy saving management function in the embodiment includes the foregoing system power supply management apparatus. Specifically, the system includes a power module 40, a main control board 41, and at least one board. The embodiment is described by using a first board 43 and a second board 44 in FIG. 3 as an example. The power module 40 is configured to supply electric power to the first board 43, the second board 44, and the main control board 41. A board energy saving management module 1 is disposed on the first board 43, the second board 44, and the main control board 41 separately; and a power supply energy saving management module 2 and a system energy saving management module 3 are further disposed on the main control board 41.

The board energy saving management module 1 is configured to perform a board energy saving action, generate a board power variation corresponding to the board energy saving action, and send, before performing the board energy saving action, the board power variation to the system energy saving management module; and
the system energy saving management module 3 is configured to: after receiving the board power variation, calculate, according to the board power variation, an expected power variation of the system, and control, according to the expected power variation of the system, the power supply energy saving management module 2 to adjust an output power of the power module 40 in the system.

Furthermore, specifically, the system energy saving management module 3 includes:
a receiving unit, configured to receive the board power variation sent by the board energy saving management module;
a calculating unit, configured to calculate, according to the board power variation received by the receiving unit, the expected power variation of the system; and
an executing unit, configured to control, according to the expected power variation of the system, the power supply energy saving management module to adjust the output power of the power module in the system.

Furthermore, specifically, the system energy saving management module 3 further includes a determining unit, where the determining unit is configured to determine, according to the expected power variation of the system obtained through calculation by the calculating unit, a change trend of board power consumption;
the executing unit is specifically configured to: when the determining unit determines that the board power consumption becomes higher, send a first control signal to the power supply energy saving management module, so that the power supply energy saving management module increases the output power of the power module; and
the executing unit is specifically configured to: when the determining unit determines that the board power consumption becomes lower, send a second control signal to the power supply energy saving management module, so that the power supply energy saving management module decreases the output power of the power module.

That the power supply energy saving management module 2 increases the output power of the power module 40 includes: turning on a redundant backup power module disposed in the system and/or increasing an input bus voltage of the power module in the system; and
that the power supply energy saving management module 2 decreases the output power of the power module 40 includes: shutting down the redundant backup power module disposed in the system and/or decreasing the input bus voltage of the power module in the system.

In this implementation manner, the main control board 41 is connected to the first board 43 and the second board 44. When the system is working, the main control board 41 performs overall control on working states of the first board 43 and the second board 44. Meanwhile, the power supply energy saving management module 2 and the system energy saving management module 3 in the main control board 41 may further complete, by using expected power changes of boards provided by the first board 43, the second board 44, and the board energy saving management module 2 in the main control board 41, adjustment of the output power of the power module 40, so as to implement a linkage between a board energy saving action and a power supply energy saving action in the system, and improve energy saving efficiency of the system.

In addition, the system may further include a functional board, such as a secondary control board, where the secondary control board serves as a backup device of the main control board 41, and a power supply energy saving management module 2 and a system energy saving management module 3 may further be disposed on the secondary control board. When the main control board 41 becomes faulty, the secondary control board takes place of the main control board 41 and performs energy saving control on each board.

The embodiment of the present invention avoids the problem of lagging and poor power efficiency of power supply energy saving control of a system in the prior art because a change in dynamic power of the system needs to be first detected, and then an energy saving operation is performed, so that a power supply energy saving control operation can be performed in a timelier manner, thereby better implementing power supply energy saving for the system and reducing power consumption of the system.

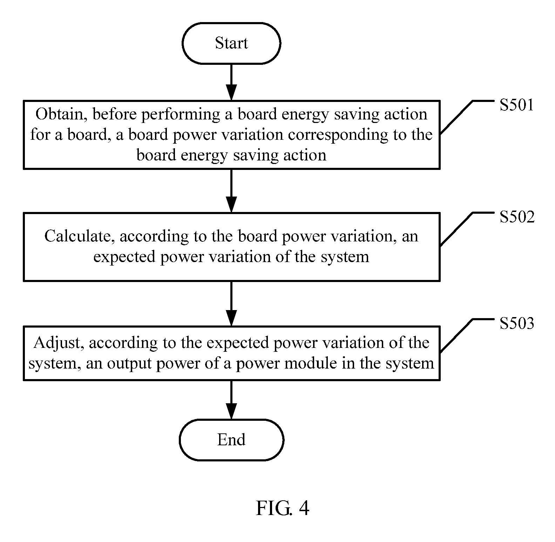

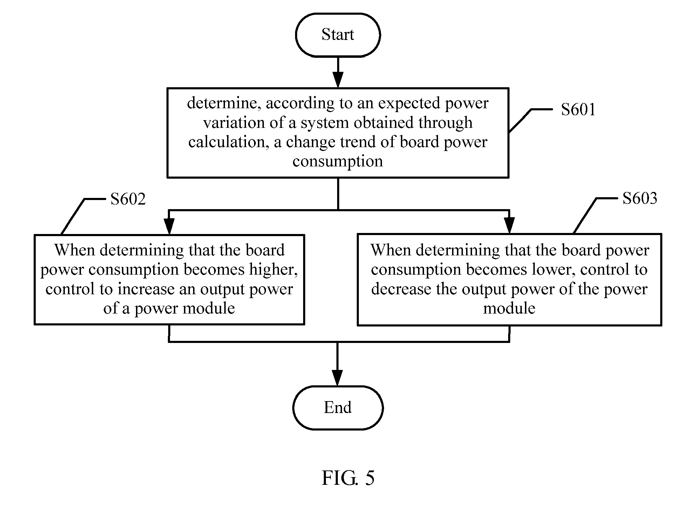

FIG. 4 is a flowchart of an embodiment of a system power supply energy saving method according to the present invention. As shown in FIG. 5, the method specifically includes the following steps:
S501: Obtain, before performing a board energy saving action for a board, a board power variation corresponding to the board energy saving action.
S502: Calculate, according to the board power variation, an expected power variation of the system.
S503: Adjust, according to the expected power variation of the system, an output power of a power module in the system.

Specifically, an independent board energy saving management module may be disposed for a board, where the board energy saving management module is configured to perform an energy saving action for the board, and before the energy saving action is performed, a board power variation that will be triggered by performing the energy saving action is reported to the system energy saving management module disposed in a main control board. The system energy saving management module, after performing S502, in S503, may adjust the power module in the system by controlling a power supply energy saving management module disposed on the main control board. Nevertheless, the foregoing step may also be completed by a system power supply management apparatus.

In step S501, the method for performing a board energy saving action specifically includes: setting a working state of a component deployed on the board in the system, and setting an on/off state of a port on the board. The component on the board may be a processor, a memory, a hard disk, Ethernet, and so on. Specifically, a working state of a device deployed on the board, such as a processor, a memory, a hard disk, or Ethernet may be set. For example, frequency modulation may be performed for the device, the device may be adjusted to a dormant state or shut down. An enabling or a disabling operation may be further performed for the port on the board. In this implementation manner of the system power supply management method provided by the present invention, the foregoing board energy saving action is performed to achieve an objective of saving energy of boards in the system.

After the board power variation is obtained, the expected power variation of the system is calculated. It should be noted that, the expected power variation of the system is a power change of the system caused by the board energy saving action. In this way, the output power of the power module is controlled and adjusted according to the expected power variation of the system, so that a linkage is implemented between a board energy saving action and a power supply energy saving action, thereby improving energy saving efficiency.

To ensure normal working of a device in the system, while controlling the output power of the power module, the present invention provides two working modes for adjusting the output power of the power module with respect to two cases where the board power consumption becomes lower and the board power consumption becomes higher. To implement the two working modes, in this implementation manner, step S502 specifically includes the following steps:
S600: Determine, according to the expected power variation of the system obtained through calculation, a change trend of board power consumption.
S601: When determining that the board power consumption becomes higher, control to increase an output power of the power module, which includes: turning on a redundant backup power module disposed in the system and/or increasing an input bus voltage of the power module in the system.
S602: When determining that the board power consumption becomes lower, control to decrease the output power of the power module, which includes: shutting down the redundant backup power module disposed in the system and/or decreasing the input bus voltage of the power module in the system.

By using the technical solution of the system power supply management apparatus and method provided by the present invention, a system energy saving management module calculates, according to a board power variation sent by a board energy saving management module, an expected power variation of the system before the board energy saving management module performs a board energy saving action. In one aspect, the system can obtain, while performing power supply energy saving control, a dynamic power change of the system before the board energy saving action is performed, so that a power supply energy saving control process of the system is timelier. In another aspect, the expected power variation of the system is calculated according to the board power variation, thereby omitting a detection process for the dynamic power change of the system. The system energy saving management module controls, according to the calculated expected power variation of the system, the power supply energy saving management module to work, so that the power supply energy saving management module performs the energy saving action by controlling a power module. Through interaction between the board energy saving management module and the system energy saving management module, a linkage is implemented between a board energy saving action and a power supply energy saving action, thereby completing adjustment of an output power of the power module in the system. The embodiments of the present invention avoid the problem of lagging and poor power efficiency of power supply energy saving control of a system in the prior art because a change in dynamic power of the system needs to be first detected, and then an energy saving operation is performed, so that a power supply energy saving control operation can be performed in a timelier manner, thereby better implementing power supply energy saving for the system and reducing power consumption of the system.

The described apparatus embodiment is merely exemplary. The units described as separate parts may or may not be physically separate, and parts displayed as units may or may not be physical units, may be located in one position, or may be distributed on a plurality of network units. A part or all of the units may be selected according to actual needs to achieve the objectives of the solutions of the embodiments. A person of ordinary skill in the art may understand and implement the embodiments without creative efforts.

Through the descriptions of the foregoing implementation manners, a person skilled in the art may clearly understand that the implementation manners may be implemented through software and an essential universal hardware platform, and certainly, may be implemented through hardware. Based on such understanding, the foregoing technical solution essentially, or the part contributing to the prior art may be implemented in the form of a software product. The computer software product may be stored in a storage medium such as a ROM/RAM, a magnetic disk, or an optical disc, and include several instructions to enable a computer device (which may be a personal computer, a server, a network device, or the like) to execute the methods described in the embodiments of the present invention or in some parts of the embodiments of the present invention.

The implementation manners do not constitute limitation on the protection scope of the technical solution. Any modification, equivalent replacement, and improvement within the spirit and principle of the implementation manners shall fall within the protection scope of the technical solution.

## Claims

1. A system power supply management apparatus, comprising a board energy saving management module, a system energy saving management module, and a power supply energy saving management module, wherein:
the board energy saving management module is configured to perform a board energy saving action, generate a board power variation corresponding to the board energy saving action, and send, before performing the board energy saving action, the board power variation to the system energy saving management module; and
the system energy saving management module is configured to: after receiving the board power variation, calculate, according to the board power variation, an expected power variation of the system, and control, according to the expected power variation of the system, the power supply energy saving management module to adjust an output power of a power module in the system.

2. The system power supply management apparatus according to claim 1, wherein the system energy saving management module specifically comprises:
a receiving unit, configured to receive the board power variation sent by the board energy saving management module;
a calculating unit, configured to calculate, according to the board power variation received by the receiving unit, the expected power variation of the system; and
an executing unit, configured to control, according to the expected power variation of the system obtained through calculation by the calculating unit, the power supply energy saving management module to adjust the output power of the power module in the system.

3. The system power supply management apparatus according to claim 2, wherein the system energy saving management module further comprises:
a determining unit, configured to determine, according to the expected power variation of the system obtained through calculation by the calculating unit, a change trend of board power consumption.

4. The system power supply management apparatus according to claim 3, wherein:
the executing unit sends, when the determining unit determines that the board power consumption becomes higher, a first control signal to the power supply energy saving management module, so that the power supply energy saving management module increases the output power of the power module; and
the executing unit sends, when the determining unit determines that the board power consumption becomes lower, a second control signal to the power supply energy saving management module, so that the power supply energy saving management module decreases the output power of the power module.

5. The system power supply management apparatus according to claim 4, wherein:
the power supply energy saving management module is specifically configured to: after receiving the first control signal sent by the executing unit, turn on a redundant backup power module disposed in the system and/or increase an input bus voltage of the power module in the system, so as to increase the output power of the power module in the system; and after receiving the second control signal sent by the executing unit, shutting down the redundant backup power module disposed in the system and/or decreasing the input bus voltage of the power module in the system, so as to decrease the output power of the power module in the system.

6. The system power supply management apparatus according to claim 5, wherein the board energy saving management module is specifically configured to set a power supply working state of a component deployed on a board and set an on/off state of a port on the board, so as to complete the energy saving action.

7. A system with a power supply energy saving management function, comprising:
a power module, a main control board, and at least one board, wherein the power module is connected to the main control board and each board through a power supply management bus to supply electric power to each board and the main control board, and the main control board is connected to each board through an inter-board communication bus;
a board energy saving management module is disposed on each board and the main control board separately;
a power supply energy saving management module and a system energy saving management module are further disposed on the main control board;
the board energy saving management module is configured to perform a board energy saving action, generate a board power variation corresponding to the board energy saving action, and send, before performing the board energy saving action, the board power variation to the system energy saving management module; and
the system energy saving management module is configured to: after receiving the board power variation, calculate, according to the board power variation, an expected power variation of the system, and control, according to the expected power variation of the system, the power supply energy saving management module to adjust an output power of the power module.

8. The system according to claim 7, wherein the system energy saving management module comprises:
a receiving unit, configured to receive a board power variation sent by the board energy saving management module;
a calculating unit, configured to calculate, according to the board power variation received by the receiving unit, an expected power variation of the system; and
an executing unit, configured to control, according to the expected power variation of the system, the power supply energy saving management module to adjust the output power of the power module.

9. The system according to claim 8, wherein:
the system energy saving management module further comprises a determining unit, wherein the determining unit is configured to determine, according to the expected power variation of the system obtained through calculation by the calculating unit, a change trend of board power consumption;
the executing unit is specifically configured to: when the determining unit determines that the board power consumption becomes higher, send a first control signal to the power supply energy saving management module, so that the power supply energy saving management module increases the output power of the power module; and
the executing unit is specifically configured to: when the determining unit determines that the board power consumption becomes lower, send a second control signal to the power supply energy saving management module, so that the power supply energy saving management module decreases the output power of the power module.

10. The system according to claim 9, wherein:
the power supply energy saving management module is specifically configured to: after receiving the first control signal sent by the executing unit, turn on a redundant backup power module disposed in the system and/or increase an input bus voltage of the power module in the system, so as to increase the output power of the power module; and after receiving the second control signal sent by the executing unit, shutting down the redundant backup power module disposed in the system and/or decreasing the input bus voltage of the power module in the system, so as to decrease the output power of the power module.

11. A system power supply management method, comprising the following steps:
obtaining, before performing a board energy saving action for a board, a board power variation corresponding to the board energy saving action;
calculating, according to the board power variation, an expected power variation of the system; and
adjusting, according to the expected power variation of the system, an output power of a power module in the system.

12. The system power supply management method according to claim 10, wherein the adjusting, according to the expected power variation of the system, an output power of a power module in the system specifically comprises:
determining, according to the expected power variation of the system obtained through calculation, a change trend of board power consumption;
when determining that the board power consumption becomes higher, controlling to increase the output power of the power module; and
when determining that the board power consumption becomes lower, controlling to decrease the output power of the power module.

13. The system power supply management method according to claim 12, wherein:
the controlling to increase, when determining that the board power consumption becomes higher, the output power of the power module comprises:
when determining that the board power consumption becomes higher, controlling to turn on a redundant backup power module disposed in the system and/or increase an input bus voltage of the power module in the system;
the controlling to decrease, when determining that the board power consumption becomes lower, the output power of the power module comprises:
when determining that the board power consumption becomes lower, shutting down the redundant backup power module disposed in the system and/or decreasing the input bus voltage of the power module in the system.

14. The system power supply management method according to claim 13, wherein the performing a board energy saving action for a board specifically comprises: setting a power supply working state of a component deployed on the board, and setting an on/off state of a port on the board.
